Europäisches Patentamt

European Patent Office

Office européen des brevets

(19)

(11) Publication number: **0 204 748**
**B1**

(12) **EUROPEAN PATENT SPECIFICATION**

(45) Date of publication of patent specification: **07.09.88**

(51) Int. Cl.⁴: **B 65 G 63/02,** B 60 P 1/64, F 16 H 25/00

(21) Application number: **85905938.8**

(22) Date of filing: **19.11.85**

(86) International application number:
**PCT/SE85/00469**

(87) International publication number:
**WO 86/03181 05.06.86 Gazette 86/12**

(54) **POWER UNIT.**

(30) Priority: **28.11.84 SE 8405995**

(43) Date of publication of application:
**17.12.86 Bulletin 86/51**

(45) Publication of the grant of the patent:
**07.09.88 Bulletin 88/36**

(84) Designated Contracting States:
**AT BE CH DE FR GB IT LI LU NL SE**

(56) References cited:
**GB-A-1 542 045**
**US-A-3 174 634**
**US-A-3 521 939**

(73) Proprietor: **LÖVGREN, Sten**
**Svanholmsvägen 10**
**S-182 75 Stocksund (SE)**

(72) Inventor: **LÖVGREN, Sten**
**Svanholmsvägen 10**
**S-182 75 Stocksund (SE)**

(74) Representative: **Bjerkén, Jarl Hakan et al**
**c/o BJERKENS/GÄVLE PATENTBYRA AB Box 304**
**S-801 04 Gävle 1 (SE)**

Courier Press, Leamington Spa, England.

## Description

### Field of the invention and prior art

This invention relates to a power unit of the type varying its length according to the preamble of claim 1.

The purpose of a power unit of this kind is to achieve that the total, maximum extension of the power unit will rise to at least twice as much as the extension in the contracted initial position of the power unit. Such a power unit can for instance be used in transferring load between two load vehicles, e.g. a lorry and a railway wagon, or between a load vehicle and e.g. a pallet. Since the load carriers of these vehicles often are approximately equally wide and it is desirable to be able to move the load from one load carrier to another load carrier in one step, so that the load in every situation comes so far into the other load room as desired, the power unit must be able to be extended to a length, which is at least two times greater than its length in the contracted state. The expression at least two times does here refer to a length which exceeds the double one with at least the length which the shortest possible distance, which is formed as a result of the fact that the two load vehicles mostly cannot be placed completely against each other, between the two load rooms constitutes.

The prior art corresponding to the preamble of claim 1 is known by US 3 174 634. The power unit according to said US patent paper has several considerable disadvantages. In order to provide the room required for on one hand the power device and on the other the extendable members a room for receiving the telescope members is laterally displacedly arranged with respect to a room for receiving the power device. The result thereof is a comparatively bulky power unit and an eccentrical transmission of the forces required for the displacement of the members.

### Summary of the invention

The present invention is based on the task to provide a power unit with comparatively small dimensions at the same time as the power influence upon the different displaceable members has to take place in such a way that no oblique loads arise.

According to the invention this object is obtained by providing the power unit according to the preamble of the claim 1 with the characteritics of the characterizing part of the claim 1.

### Brief description of the drawings

With reference to the appended drawings, below follows a specific description of an embodiment of the invention chosen as an example. In the drawings:

Figure 1 is a partly simplified view cut in the symmetry plane S—S of the power unit in accordance with the invention,

Figure 2 illustrates the same power unit as is illustrated in Figure 1 in a partly sectioned view from the N-direction (Figure 1),

Figure 3 is a detailed cross section view of said power unit along III—III, illustrating the mutual holding and guiding of the different members,

Figure 4 is a detailed cross section view of the power unit along the cut IV—IV illustrating among other things the location of the chain transmission, and

Figure 5 is a view of the same sort as Figure 2, but of the power unit in a more extended state.

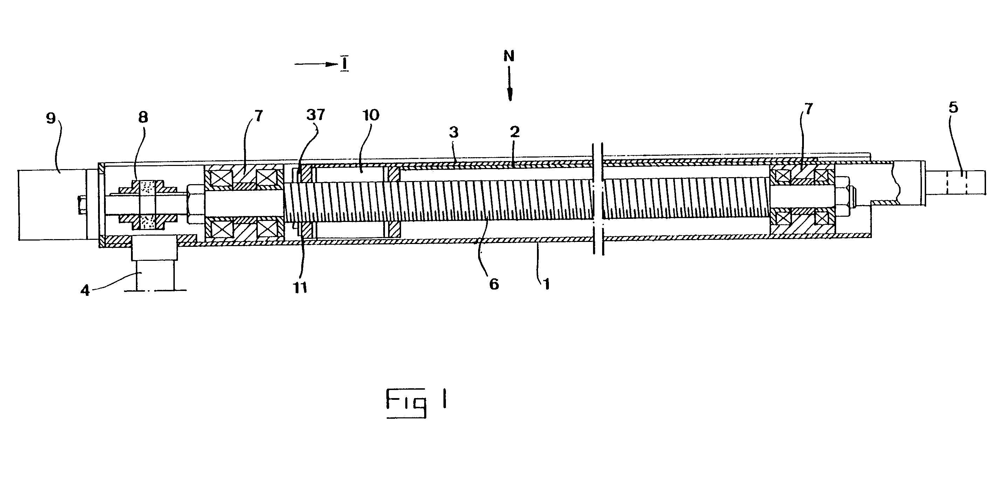

In Figure 1, 2 and 5 the power unit has been shrunk in the direction of the arrow I by omitting a part of the central region of the power unit (see dashed line).

### Detailed description of preferred embodiment

In Figure 1 the first member, which generally constitutes an outer housing of the power unit, is indicated with 1. This member is at its one outer end provided with a first attaching means 4, by means of which the power unit can be attached to an object, for example a lorry platform. A second member which is indicated with 2 is encased of the first one and a third member indicated with 3 and has an elongated extension in the direction to the right in the figure. The second member is at its outer end provided with a second attaching means 5 for attaching of the power unit to preferably a transmitting means of a transferring device. The second and the third member are movable in the direction of the arrow I with respect to the first, generally fixed localized member and with respect to each other.

The power unit has a power device which consists of the components described hereafter. The second member includes a longitudinal screw 6 extending in the direction of the arrow I generally between the two outer ends of the power unit. This screw is borne by two bearings 7, which are fixed at the two ends of the first member, rotatable about its longitudinal axis but not displaceable in the direction of said axis. The screw 6 is through a coupling 8 at the one outer end of the power unit connected to a motor 9, preferably a hydraulic one, which is intended to set the screw in rotation. The coupling is of such type, that, in order to prevent damages of the power unit, it will slip if the torque of the screw 6 gets too high. A nut 10 is in engagement with the thread of the screw 6 and by the rotation of the screw moved forwards and backwards along the screw. In doing so, the nut 10 is prevented from rotating, since it at opposite sides is firmly connected to a connecting plate 11, which in its turn is connected to a portion of the third member. The rotation of the screw 6 and the displacement of the nut caused by that accordingly lead to a similar displacement of the third member.

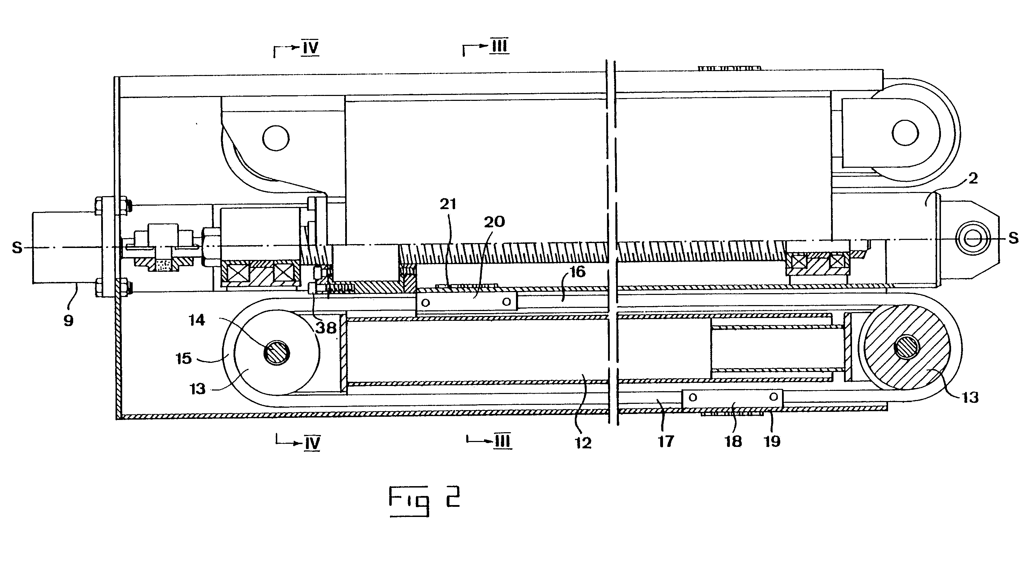

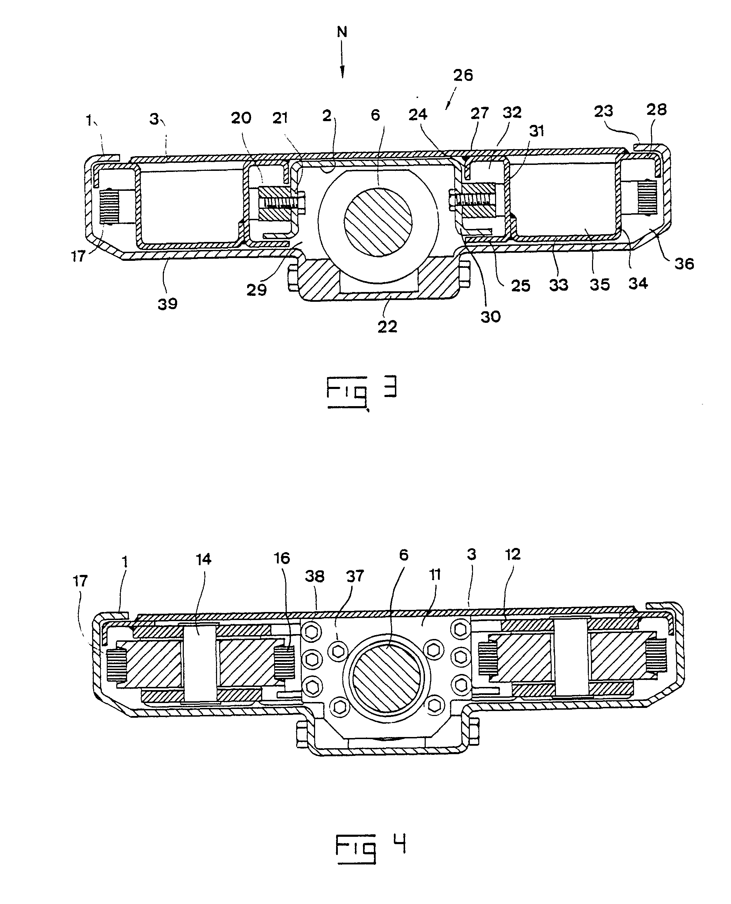

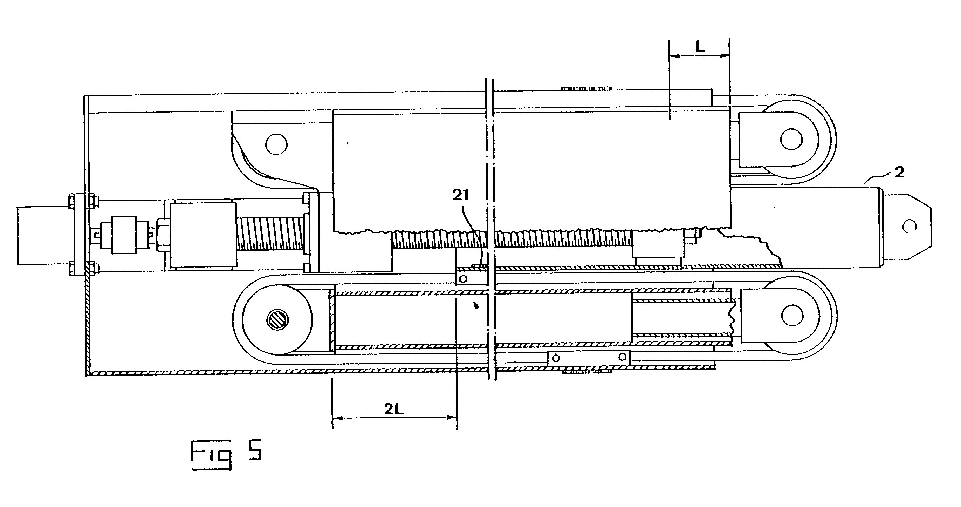

In the following it is referred to Figure 2 as well as Figure 3. The third member has two portions, here called frames 12, which are located on both sides of the symmetry plane S—S. A rotatable chain wheel 13 is fixedly disposed on each frame 12 at the two opposite ends thereof, in such manner that the pin bolt 14 of the chain wheels, the geometrical center axis of which is parallel to the N-direction, is secured to the frame. Each of the two wheels pairs carries a chain loop 15, which during the rotation of the wheels 13 moves generally parallel to the displacement direction of the third member (arrow I). In this embodiment example a transmission including a chain has been chosen, but the loop 12 can also consist of a band, a belt or other flexible retractive force transmitting means. Thus, this chain loop 15 engages with the chain wheels 13 for example because the chain wheels have teeth or the like or because the chain wheels, as indicated in the drawings, have peripherical grooves, in which the chains are received and guided against lateral movement. Each chain loop has an inner 16 and an outer 17 chain part. The chain loop is through a first connecting member 18 at a first point 19 firmly connected to the first member and through a second connecting member 20 at a second point 21 firmly connected to the second member (see especially Figure 3). On displacing the third member with respect to the first member the distance L, the second member will accordingly be displaced the distance 2 L with respect to the first member (see also Figure 5).

By referring to Figure 3 the advantageous constitution and disposition of the three main members of the power unit in accordance with the preferred embodiment will be explained. The first member has an elongated cross-sectional shape and is generally forming a housing for the power unit. The center region 22 of this housing encases the power device with the geometrical center axis of the screw 6 extending in the symmetry plane S—S of the power unit. The first member has portions 23 which extend around and hold the third member, which in this way, through the surfaces of the these portions, is displaceably supported by the first member. Similarly the third member is provided with portions 24, 25, 27 and surfaces for displaceably supporting and guiding the second member. The housing formed by the first member is provided with an opening 26 emerging in the direction opposite the N-direction, this opening being closed by an elongated portion 27 of the third member. This portion 27 and the portion 25 of the third member are holding the second member against displacements in the latter direction. At the same time the portion 24 of the third member is holding the second member against displacements in the direction of the normal of the symmetry plane S—S. Through the curved portion 23 of the first and the curved portion 28 of the third member the third member is held against displacements in the direction of the normal of the symmetry plane S—S as well as in the direction opposite the N-direction. At the same time the third member is by this very advantageous design of the invention held indirectly by itself, as a result of that it, being held by the first member, holds the second member, which by means of this in its turn together with the first member holds portions 25 of the third member.

This design of the different members leads to their joint defining of a number of rooms. With the symmetry plane S—S as starting-point the power unit is provided with the following rooms in the direction of the normal of this plane: The central region 22 of the first member and the second member are forming a room 29 elongated in the displacement direction (I) and generally housing the power device. The portion 30 of the second member and the portion 31 of the third member define a room 32 elongated in the same direction and housing the inner chain part 16 of the chain loop 15. In Figure 3 the connecting member 20, which connects the inner chain part 16 to a second member, is visible, said connecting member being also situated in this room 32. The portions 27, 31, 33 and 34 of the third member encase a room 35 extending between the two chain wheels 13 and generally constituting an empty space. Finally the portions 28 and 34 of the third member and the outer portion 22 of the first member encase a room 36 elongated also in a direction of the arrow I, through which room the outer chain part 17 of the chain loop 15 passes.

Figure 4 illustrates that only one room, which is encased by the first member and the portion 27 of the third member, exists at the cross section IV—IV; this is also necessary in order to make the housing of the two chain wheels 13 in the way mentioned above possible (with the center axis of the pin bolt 14 parallel to the N-direction). The pin bolt 14 is secured to the earlier mentioned frames 12. In this Figure it is also clearly visible how the connecting plate 11 is fixed on one hand by the bolt 37 to the nut 10 and on the other hand by the bolts 38 to portions of the third member (see also Figure 1 and Figure 2).

Hereunder the function and the advantages of the invention according to the preferred embodiment are described. Figure 5 illustrates how the power unit from its almost completely contracted state (Figure 2) is displaced in the direction of the arrow I. The third member, to which the chain wheels 13 are attached, has by the rotating of the screw 6 been displaced the distance L with respect to the first, fixedly attached member. In doing so a part of the opening 26 has been exposed, and the internal members of the power unit, a.o. the power device, have become visible. The connecting member 20 between the inner chain part 16 and the second member has at the same time been displaced the distance L with respect to the third member. As a result of this the point 21, accordingly the second member, has been displaced the distance 2L with respect to the first member.

In using the power unit it can for instance be fixed on a bearer, as a lorry chassis or platform, so that it is situated in a recess or a groove in the bearer, so that the portion 27 of the third member extends beneath unrecessed parts of the bearer. Over the power unit a lifting device, for example of the pressure fluid type can be disposed so as to act between the two members, e.g. two plates, of a means for transmitting loads from one bearer to another. The lower part of the transmitting means which through the attachment means 5 is attached to the second member 2 rests upon portions of said groove in the bearer. The two members of the transmitting means are only connected vertically displaceable between themselves. When the lorry is loaded and driven close to for instance a railway wagon for further transport of the load, the upper member of the transmitting means is lifted by means of the lifting device in relation to the lower member first of all vertically upwards until the load rests solely upon this member. It should be added that it is of advantage to dispose a plurality of power units and transmitting means in grooves in the bearer parallel with respect to each other, in order to make the carrying and transmitting of the load to take place in a stable and safe way. When the load is resting upon the upper member of the transmitting means the screw 6 is rotated through the starting of the hydraulic motor 9. This causes the nut 10 to push the third member in the direction of the arrow I, simultaneously as the third member by the action of the chain transmissions is displacing the second member with respect to itself in the same direction and the same distance (see Figure 5). The load is now resting upon the upper member of the transmitting means indirectly connected through the lower member to the second member, and displaced so far into the railway wagon as required. By conversion of the number of rotation of the screw 6 caused by the hydraulic motor 9, the distance which the load is moved can be measured easily, instantaneously and very exactly during the whole operating process. In already known power units pressure cylinders are often employed as power devices, which causes a length measurement not at all so exact as this. The railway wagon is preferably provided with transversal beams between which vacant spaces are located, into which vacant spaces the power unit and the lower member of the transmitting means can run and into which the upper part of the transmitting means can be lowered by means of the lifting device in order to lay the load down in the railway wagon. After this the screw 6 is rotated in the direction opposite to the previous mentioned one, and the power unit is contracted to its starting position.

Some members of the power unit are exposed during the transfer of the load (see Figure 5), since the opening 26 in the first member is not any longer closed by the portion 27 of the displaced third member. This can possibly be advantageous, if it is desired to get access to certain members inside the power unit, but if one wishes to protect the internal members of the power unit by holding the opening 26 closed all the time, an appropriate design of the first member can naturally easily be made.

Since there are two chain transmissions and they are located in the way described above, important advantages in comparison with the already known constructions are obtained. Thanks to that the pin bolt 14 of the chain wheels has been located with its geometrical center axis parallel to the N-direction and that the chain transmissions are disposed on both sides of the power device, it was possible to make the power unit very thin in said direction. This leads to that the housing of the power unit requires much less room in the vertical direction (the N-direction), which is very advantageous. The disposition of the chain transmissions according to above does also lead to, and this is of great importance, that the torsion loads upon the frame 12 of the third member bearing the chain wheels 13 are getting considerably lower than for already known constructions. The fact that two instead of one chain transmission are used, reduces said loads, but the most important thing is the locating of the chain transmissions symmetrically to the S—S plane and in generally one and the same normal plane to the S—S plane.

The disposition for displaceably supporting and bearing the different members by means of each other can be performed in other manners than that here described, but it must be pointed out that the illustrated disposition is very appropriately constructed. The different members are held stable, the internal members of the unit are protected by the first member constituting the housing and the different members can be mutually displaced in the direction of the arrow I, completely rectilinealy by forming support for each other from all directions.

Through the embodiment of the invention described above the object of the invention is obtained in a satisfying manner. But it is a matter of course that the invention is not limited to this embodiment example, but several modifications of the invention within the scope of the claims, for adaption to different application branches, will be possible. For instance it is possible to use other power devices than of the screw-nut-type, such as a piston-cylinder mechanism.

**Claims**

1. A power unit of the type varying its length comprising three members movable in relation to each other, a first member (1) being by a first attachment (4) or the like adapted for connection to a first object and a second member (2) being arranged to move a second object along a single axis generally parallel to the longitudinal axis of the power unit, an elongated power device acting between said first member and a third (3) of the members so as to mutually displace them by the fact that the power device has two mutually displaceable members, one (6) of which is arranged on the first member while the other (10) is arranged on the third member (3), said power unit being provided with at least one transmission comprising an endless flexible member (15) passed around wheels (13) having axles attached to a frame (12), and at a first point (19) secured to the first member and at a second point (21) secured to the second member, said frame (12) being connected to the third member, whereby on the displacement of the third member with respect to the first one by means of the power device, with assistance from the transmission, a twice as great displacement in the same direction (arrow I) of the second member with respect to the first one is obtained, said first member (1) having an elongated shape in cross section as viewed in the direction of the longitudinal axis of the power unit, the three members (1, 2, 3) surrounding each other and guiding each other by sliding relative to one another, viz as a result of the fact that the first member (1) surrounds portions (25, 28, 33) of the third member (3) which slides on these portions, while other portions (24, 25, 27) of the third member (3) surround the second member (2) which slides on the latter portions, characterized in that the power unit comprises two transmissions being generally symmetrically arranged in a mirror image relation to each other with respect to a symmetry plane (S—S) comprising the longitudinal axis of the power device arranged in the central region of the first member (1) and being perpendicular to the greater dimension of said cross-sectional shape of the first member, that the axles of said wheels (13) are generally parallel to said symmetry plane (S—S) and perpendicular to the longitudinal axis of the power unit, that the second member (2) is centered with respect to said symmetry plane and together with the central region (22) of the first member (1) forms a room (29) elongated in the displacement direction and housing the power device by the fact that the second member (2) is provided with a generally U-shaped cross section with the legs of the U extending from the base of the U in the direction towards first wall portions (39) of the first member (1) extending along the greater dimension of said cross-sectional shape of the first member and with said legs located on each side of the power device, that portions (25) of the third member supporting and guiding the second member project between the extremities (30) of the legs of the U-shaped second member (2) and said first wall portions (39) of the first member (1), that the legs of the second, U-shaped member (2) between themselves and second wall portions of the first member (1) located outside the legs and extending at an angle to the greater dimension of the cross-sectional shape of the first member form rooms (32, 35, 36) on both sides of the room (29) provided for the power device, said rooms housing sections of the third member (3) bearing the transmissions and these transmissions, and that the parts (16) of the two flexible members being located closest to each other are secured to the legs of the second, U-shaped member (2), while the parts (17) of the two flexible members being located most far away from each other are secured to second wall portions of the first member (1).

2. A power unit according to claim 1, characterized in that the power device comprises an elongated screw (6) extending in the direction (arrow I) of the relative movement of the members (1, 2, 3).

3. A power unit according to claim 2, characterized in that a nut (10) engages with the thread of the screw (6) so as to be moved forwards and backwards along the screw on rotation thereof, said nut being connected to the third member (3).

4. A power unit according to claim 3, characterized in that the center axis of the screw extends generally in the plane of the loops (15) of the transmission in order to make the power unit as thin as possible in the direction of the normal of this plane.

5. A power unit according to claim 1, characterized in that the housing formed by the first member (1) is provided with an opening (26) emerging perpendicularly to the longitudinal extension of the power unit, said opening being closed by a portion (27) of the third member (3), which through the first member (1) is prevented from being removed from the power unit in the direction perpendicular to the longitudinal extension of the power unit.

**Patentansprüche**

1. Motoreinheit längenveränderlicher Art mit drei untereinander beweglichen Teilen, wobei ein erster Teil (1) durch eine erste Halterung (4) oder dergleichen zur Verbindung mit einem ersten Gegenstand und ein zweiter Teil (2) zur Verschiebung eines zweiten Gegenstands entlang einer einzigen, zu der Längsachse der Motoreinheit im wesentlichen parallelen Achse ausgebildet sind, wobei eine langgestreckte Kraftvorrichtung zwischen dem ersten Teil und einem dritten (3) der Teile wirkt, um sie untereinander zu verschieben, indem die Kraftvorrichtung zwei untereinander bewegliche Elemente aufweist, von denen ein (6) am ersten Teil und das andere (10) am dritten Teil (3) vorgesehen sind, wobei die Motoreinheit mit mindestens einer ein endloses, flexibles Organ (15) aufweisenden Transmission versehen ist, das um mit an einem Rahmen (12) befestigten Achsen versehenen Räder (13) herumgelegt und an einem ersten Punkt (19) am ersten Teil und an einem zweiten Punkt (21) am zweiten Teil festgemacht ist, wobei der Rahmen (12) mit dem dritten Teil verbunden ist, wodurch die Verschiebung des dritten Teils bezüglich des Erstens durch die Kraftvorrichtung, mit Hilfe der Transmission eine doppelt so grosse Verschiebung des zweiten Teils bezüglich des Erstens in der gleichen Richtung (der Pfeil I) hervorruft, wobei der erste Teil (1) eine in der Richtung der Längsachse der Motoreinheit längliche Querschnittsform hat, wobei die drei Teile (1, 2, 3) einander umgreifen und durch Gleiten bezüglich einander einander führen, und zwar greift der erste Teil (1) Abschnitte (25, 28, 33) des dritten Teils (3) der auf diesen Abschnitten gleitet, um, während andere Abschnitte (24, 25, 27) des dritten Teils (3) den zweiten Teil (2), der auf den letzten Abschnitten gleitet, umgreifen, dadurch gekennzeichnet, dass die Motoreinheit zwei bezüglich eines Symmetrieplans (S—S), der die Längsachse der in dem Mittenbereich des ersten Teils (1) vorgesehenen Kraftvorrichtung enthält und senkrecht auf der grösseren Dimension der Querschnittsform des ersten Teils steht, im wesentlichen spiegelsymmetrisch angeordnete Transmissionen aufweist, dass die Achsen der Räder (13) zu dem Symmetrieplan (S—S) im wesentlichen parallel sind und auf der Längsachse der Motoreinheit im wesentlichen senkrecht stehen, dass der zweite Teil (2) bezüglich des Symmetriplans zentriert ist und zusammen mit dem Mittenbereich (22) des ersten Teils (1) einen in der Verschiebungsrichtung langgestreckten und die Kraftvorrichtung unterbringenden Raum (29) dadurch bildet, dass der zweite Teil (2) einen im wesentlichen U-förmigen Querschnitt, mit den Schenkeln des U's sich vom Fuss des U's in der Richtung gegen sich entlang der grösseren Querschnittsdimension des ersten Teils erstreckende erste Wandabschnitte (39) des ersten Teils (1) erstreckend und auf beiden Seiten der Kraftvorrichtung gelegen, dass den zweiten Teil stützende und führende Abschnitte (25) des dritten Teils zwischen den Aussenenden (30) der Schenkel des U-förmigen zweiten Teils (2) und den ersten Wandabschnitten (39) des ersten Teils (1) hineinragen, dass die Schenkel des zweiten, U-förmigen Teils (2) zwischen sich selber und auf der Aussenseite davon gelegenen, im Winkel zu der grösseren Querschnittsdimension des ersten Teils verlaufenden zweiten Wandabschnitten des ersten Teils (1) auf beiden Seiten des für die Kraftvorrichtung vorgesehenen Raumes (29) gelegene Räume (32, 35, 36) bilden, die die Transmissionen tragende Abschnitte des dritten Teils (3) und diese Transmissionen unterbringen, und dass die am nächsten zueinander gelegenen Parte (16) der beiden flexiblen Organe an den Schenkeln des zweiten, U-förmigen Teils (2) festgemacht sind, während die weitest entfernt voneinander gelegenen Parte (17) der beiden flexiblen Organe an den zweiten Wandabschnitten des ersten Teils (1) festgemacht sind.

2. Motoreinheit nach Anspruch 1, dadurch gekennzeichnet, dass die Kraftvorrichtung eine langgestreckte, sich in der Relativbewegungsrichtung (der Pfeil I) der Teile (1, 2, 3) erstreckende Schraube (6) aufweist.

3. Motoreinheit nach Anspruch 2, dadurch gekennzeichnet, dass eine Mutter (10) mit dem Gewinde der Schraube im Eingriff ist, um sich hin und zurück entlang der Schraube zu bewegen, wenn die Schraube rotiert wird, und dass die Mutter mit dem dritten Teil (3) verbunden ist.

4. Motoreinheit nach Anspruch 2, dadurch gekennzeichnet, dass die Zentrumachse der Schraube sich im wesentlichen in der Ebene der Schleifen (15) der Transmissionen erstreckt, um die Motoreinheit so schmal wie möglich in der Richtung der Normale dieser Ebene zu machen.

5. Motoreinheit nach Anspruch 1, dadurch gekennzeichnet, dass das durch den ersten Teil (1) gebildete Gehäuse mit einer senkrecht zur Längserstreckung der Motoreinheit mündenden Öffnung (26) versehen ist, wobei die Öffnung durch ein Abschnitt (27) des dritten Teils (3) geschlossen wird, der durch den ersten Teil (1) am Entfernen der Motoreinheit in der Richtung senkrecht zur Erstreckungsrichtung der Motoreinheit gehindert wird.

**Revendications**

1. Groupe moteur du type à longueur variable qui comprend trois organes pouvant se déplacer l'un par rapport à l'autre, le premier organe (1) étant adapté à être relié, par un premier accessoire (4) ou autre, à un premier objet, et un second organe (2) arrangé pour mouvoir un second objet le long d'un axe unique pratiquement parallèle à l'axe longitudinal du groupe moteur, un dispositif de puissance allongé opérant entre ledit premier organe et un troisième organe (3) de manière à les déplacer mutuellement par le fait que le dispositif de puissance possède deux organes déplaçables mutuellement, dont l'un (6) est monté sur le premier organe, tandis que l'autre (10) est monté sur le troisième organe (3), ledit groupe moteur étant pourvu d'une transmission, au moins, comprenant un organe flexible sans fin (15) passant autour des roues (13) dont les essieux sont fixés à un châssis (12), et à un premier point (19) fixé au premier organe, ainsi qu'à un second point (21) fixé au second organe, ledit châssis (12) étant relié au troisième organe, ce qui fait que quand le troisième organe se déplace par rapport au premier sous l'action du groupe moteur avec le concours de la transmission, on obtient un déplacement double dans la même direction (flèche I) du second organe par rapport au premier, ledit premier organe (1) ayant une section de forme allongée, vu dans la direction de l'axe longitudinal du groupe moteur, les trois organes (1, 2, 3) s'entourant l'un l'autre et se guidant mutuellement en glissant l'un par rapport à l'autre, ce qui résulte du fait que le premier organe (1) entoure certaines parties (25, 28, 33) du troisième organe (3) qui glisse sur ces parties, tandis que d'autres parties (24, 25, 27) du troisième organe (3) entourent le second organe (2) lequel glisse sur ces dernières parties, caractérisé en ce que ledit groupe moteur comprend deux transmissions disposées symétriquement selon une relation énantiomorphe ou spéculaire par rapport à un plan de symétrie (S—S) comprenant l'axe longitudinal du dispositif de puissance monté dans la partie centrale du premier organe (1) et qui est perpendiculaire à la grande dimension de la section du premier organe, en ce que les essieux desdites roues (13) sont pratiquement perpendiculaires audit plan de symétrie (S—S) et perpendiculaires à l'axe longitudinal du groupe moteur, en ce que le second organe (2) est centré par rapport audit plan de symétrie et forme, conjointement avec la région centrale (22) du premier organe (1) une chambre (29) allongée dans la direction du déplacement et de l'enveloppe du dispositif de puissance par le fait que le second organe (2) présente une section ayant une forme générale en U dont les branches de l'U s'étendent vers les premières parties de paroi (39) du premier organe (1) s'étendant le long de la grande dimension de ladite section du premier organe et avec lesdites branches disposées de part et d'autre du dispositif de puissance, en ce que des parties (25) du troisième organe qui supportent et guident le second organe, s'avancent entre les extrémités (30) des branches du second organe en U (2) et lesdites premières parties du paroi (39) du premier organe (1), en ce que les branches du second organe en U (2) forment, entre elles-mêmes et les secondes parties de paroi du premier organe (1) placées extérieurement aux branches et s'étendant suivant un certain angle par rapport à la grande dimension de la section du premier organe, des chambres (32, 35, 36) de part et d'autre de la chambre (29) prévue pour le dispositif de puissance, lesdites chambres logeant des sections du troisième organe (3) portant les transmissions, et en ce que les parties (16) des deux organes flexibles qui sont placés le plus près l'une de l'autre sont fixées aux branches du second organe en U (2), tandis que les parties (17) des deux organes flexibles qui sont les plus éloignées l'une de l'autre sont fixées aux secondes parties de paroi du premier organe (1).

2. Groupe moteur selon la revendication 1, caractérisé en ce que le dispositif de puissance comprend une vis allongée (6) s'étendant dans la direction de la flèche I du mouvement relatif des organes (1, 2, 3).

3. Groupe moteur selon la revendication 2, caractérisé en ce qu'un écrou (10) s'engage sur le filetage de la vis (6) de façon à avancer et à reculer le long de ladite vis quand celle-ci tourne, ledit écrou étant relié au troisième organe (3).

4. Groupe moteur selon la revendication 3, caractérisé en ce que l'axe central de la vis s'étend pratiquement dans le plan des boucles (15) de la transmission afin de rendre le groupe mogeur aussi mince que possible dans la direction perpendiculaire à ce plan.

5. Groupe moteur selon la revendication 1, caractérisé en ce que l'enveloppe formée par le premier organe (1) est percée d'une ouverture (26) débouchant perpendiculairement à l'extension longitudinale du groupe moteur, ladite ouverture étant fermée par une partie (27) du troisième organe (3), qui, par le premier organe (1) est empêché d'être enlevé du groupe moteur dans la direction perpendiculaire à l'extension longitudinale du groupe moteur.

Fig 1

Fig 2

0 204 748

Fig 3

Fig 4

Fig 5

0 204 748